Europäisches Patentamt

European Patent Office

Office européen des brevets

(19)

(11) Veröffentlichungsnummer: **0 022 747**
**A2**

(12) **EUROPÄISCHE PATENTANMELDUNG**

(21) Anmeldenummer: 80810193.5

(22) Anmeldetag: 11.06.80

(51) Int. Cl.³: **G 01 S 17/10**

(30) Priorität: **13.07.79 CH 6510/79**

(43) Veröffentlichungstag der Anmeldung: **21.01.81**
**Patentblatt 81/3**

(84) Benannte Vertragsstaaten: **DE GB SE**

(71) Anmelder: **KERN & CO. AG Werke für**
**Präzisionsmechanik Optik und Elektronik,**
**CH-5001 Aarau (CH)**

(72) Erfinder: **Balmer, Beat, Dr.sc.nat., Juchstrasse,**
**CH-5726 Unterkulm (CH)**
Erfinder: **Meier, Dietrich, Dr.phil.nat., Bläuenstrasse 792,**
**CH-5015 Untererlinsbach (CH)**
Erfinder: **Nünlist, René, Goldernstrasse 12,**
**CH-5000 Aarau (CH)**

(74) Vertreter: **Seeger, Jan, c/o Kern & Co. AG,**
**CH-5001 Aarau (CH)**

(54) **Verfahren zur elektrooptischen Entfernungsmessung, sowie Vorrichtung zu dessen Durchführung.**

(57) Zur Messung der Entfernung zu einem Objekt wird die Laufzeitdifferenz von Lichtimpulsen zwischen dem Meßweg und einem Referenzweg bestimmt. Dabei werden die die Laufzeiten definierenden Empfangszeitpunkte für die Lichtimpulse dadurch bestimmt, daß jeder Impuls in zwei Impulskomponenten geteilt wird (8, 8'), deren Pulsform durch Integration (9–12) aufbereitet wird. Nach einer Laufzeitverschiebung (13, 14) zwischen den Impulskomponenten werden deren Differenzen gebildet, die für die Bestimmung der Empfangszeitpunkte geeignete Nullstellen aufweisen. Zu diesem Zweck sind verschiedene Schaltungen mit optischen und elektrischen Verzögerungsleitungen (13, 14) angegeben, welche auch für die Referenz- und Meßimpulse gemeinsam verwendet werden können. Durch Verwendung verzweigter Lichtwellenleiter (39, 40, 41) ergibt sich ein besonders einfacher Aufbau.

0022747

- 1 -

KERN & CO. AG                                    5001  Aarau

                                                 (Schweiz)


Verfahren zur elektrooptischen Entfernungsmessung, sowie Vorrichtung

zu dessen Durchführung
_____


Die Erfindung betrifft ein Verfahren zur Messung der Entfernung zwischen einem Objekt und einem Bezugspunkt, bei dem Lichtimpulse von einem Sender zum Objekt und vom Objekt zurück zu einem Empfänger in der Nähe des Senders übertragen werden und bei dem zur Gewinnung der Laufzeit der Lichtimpulse mittels fotoelektrischer Empfänger Sende- und Empfangszeitpunkte der Lichtimpulse definierende elektrische Signalimpulse erzeugt werden, sowie Vorrichtungen zu dessen Durchführung.


Bei bekannten elektrooptischen Entfernungsmessgeräten wird die Laufzeit von Lichtimpulsen über die Messstrecke vom Pulslaser zum Zielobjekt und zurück bis zur Empfänger-Fotodiode dadurch gemessen, dass die Impulse am Sender optisch geteilt werden. Es läuft dann gleichzeitig ein Teil des Lichtpulses über die Messstrecke und der andere Teil über einen kurzen Referenzweg, z.B. eine Glasfaser zum fotoelektrischen
Empfänger. Als Empfänger ist meist für den Referenzweg und den Messweg je eine separate Fotodiode vorgesehen, in denen die Lichtpulse
in elektrische Messignale umgesetzt werden. Die Laufzeit des
optischen Messimpulses wird als Zeitdifferenz zwischen dem elektrischen Referenzimpuls und dem elektrischen Messimpuls gemessen.
Aus der Laufzeit und der bekannten Lichtgeschwindigkeit berechnet
man dann die Länge der Messstrecke.

Bei diesen bekannten Verfahren ergibt sich eine beschränkte Messgenauigkeit durch Fehler in der Bestimmung der Zeitpunkte, in denen
die Lichtimpulse, insbesondere der Messimpuls vom Fotoempfänger aufgenommen wird. Dabei wird entweder die steigende Flanke des Empfängerausgangssignales oder die fallende Flanke des differenzierten Signales zur Bestimmung der Zeitpunkte verwendet. Beim erstgenannten
Verfahren hängt das Messergebnis stark von der Pulshöhe des
empfangenen Lichtpulses ab, bei der anderen Methode dagegen von der
Form des Detektor-Pulssignales. Sowohl Pulshöhe als auch Pulsform
der Messlichtimpulse hängen ihrerseits stark von den Messbedingungen
ab, z.B. Messdistanz, Sichtweite, Art des Zielobjektes, Fokussierung
des Messlichtes usw.

Zur Ueberwindung dieser Schwierigkeiten wurde schon vorgeschlagen,
in der Diodenempfangsschaltung als Arbeitswiderstand einen Parallelresonanzkreis zu schalten, der aus einer Spule und der Sperrschichtkapazität der Empfangsdiode sowie einer zusätzlichen parallelgeschalteten externen Kapazität besteht (DT-OS 2 634 627 (MITEC)). Die
Nullstellen der resultierenden Ausgangssignale weisen eine verminderte Empfindlichkeit gegenüber Pulshöhenschwankungen der eintreffenden Lichtimpulse auf.

0022747

Ferner ist es zur Lösung dieser Aufgabe auch schon bekannt, die Zeit zwischen dem Referenzimpuls und der genauen Mitte des Messimpulses zu messen (US-PS 4 111 552 (Siemens)). Diese Mitte ist weitgehend unabhängig von der Pulshöhe, jedoch wirken sich Formstörungen der Messpulse immer noch nachteilig aus.

Aufgabe der vorliegenden Erfindung ist es, Verfahren und Vorrichtungen anzugeben, bei denen die Wirkungen der oben genannten Fehlerquellen reduziert sind.

Gelöst wird diese Aufgabe bei einem Verfahren der eingangs genannten Art dadurch, dass die Impulse zur Bestimmung der Sende- und Empfangszeitpunkte in jeweils zwei Impulskomponenten mit definierter Phasenlage geteilt werden, dass die Impulse zur Unterdrückung von Störanteilen über mindestens eine Pulsformerstufe geführt werden, dass die eine Impulskomponente gegenüber der anderen um eine definierte Zeitdauer verzögert wird, dass die Differenz zwischen verzögerter und unverzögerter Impulskomponente gebildet wird und dass das Auftreten eines bestimmten Pegels im Differenzsignal zur Bestimmung des Empfangszeitpunktes des jeweiligen Impulses verwendet wird.

Eine erfindungsgemässe Vorrichtung zur Durchführung dieses Verfahrens, bei der die vom Objekt zurückkommenden Lichtimpulse direkt auf einen fotoelektrischen Empfänger fallen, zeichnet sich aus durch eine Integrationsschaltung, zur Pulsformung der Ausgangssignale des fotoelektrischen Empfängers, durch eine Verzögerungsschaltung zur definierten Verzögerung der Ausgangssignale der Integrationsschaltung, ferner durch eine Differenzstufe zur Bildung der Differenz zwischen unverzögertem und verzögertem Ausgangssignal der Integrationsschaltung und einen Komparator für das Differenzsignal, der ein zeitsignifikantes Messignal abgibt, wenn das Differenzsignal den Pegel Null durchläuft.

Eine andere erfindungsgemässe Vorrichtung ist gekennzeichnet durch einen optischen Strahlenteiler zur Teilung der Lichtimpulse, durch eine optische Verzögerungsleitung zur definierten Verzögerung einer Komponente der geteilten Lichtimpulse, durch je einen fotoelektrischen Empfänger zur Umsetzung der unverzögerten und der verzögerten Komponenten, ferner durch eine invertierende und eine nichtinvertierende Integrationsschaltung zur Pulsformung der verzögerten bzw. unverzögerten Ausgangssignale der fotoelektrischen Empfänger, eine Summierstufe zur Bildung der Summe des verzögerten Ausgangssignales der einen und des unverzögerten Ausgangssignales der anderen Integrationsschaltung, sowie einen Komparator für das Summensignal, der ein zeitsignifikantes Messignal abgibt, wenn das Summensignal den Pegel Null durchläuft.

Weitere erfindungsgemässe Varianten von Vorrichtungen zur Entfernungsmessung sind in den Unteransprüchen gekennzeichnet.

Die Erfindung wird nachfolgend anhand von in Figuren der Zeichnungen schematisch dargestellten Ausführungsbeispielen näher erläutert.
Es zeigen:

Fig. 1 ein Blockschema einer erfindungsgemässen Vorrichtung zur elektrooptischen Entfernungsmessung,

Fig. 2 eine Empfängerschaltung für die Vorrichtung gemäss Fig. 1,

0022747

mit elektrischen Signalverzögerer,

Fig. 3  eine weitere Empfängerschaltung mit optischem Signalverzögerer,

Fig. 4  eine Empfängerschaltung mit kombinierter elektrischer Impulsformung und Impulsverzögerung,

Fig. 5  das Schema einer Entfernungsmessvorrichtung mit nur einem
elektrischen Empfängerkanal,

Fig. 6  das Schema einer Entfernungsmessvorrichtung mit nur einem
optischen Kanal für Sender, Empfänger und Signalverzögerer und

Fig. 6a  eine Variante gemäss Fig. 6 mit Wellenleiterverzweigungen.


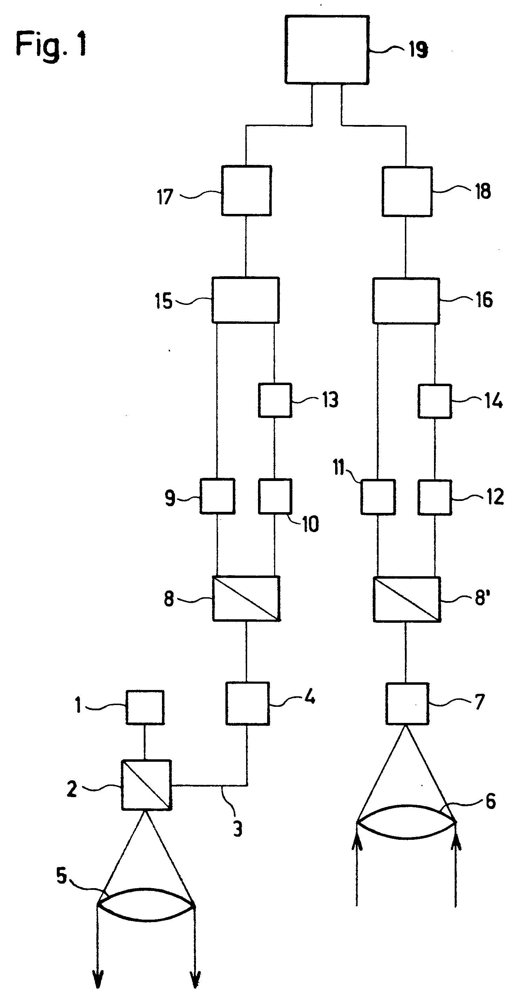

In Fig. 1 ist mit 1 ein optischer Sender an sich bekannter Art für
Lichtimpulse bezeichnet. Derartige Sender arbeiten mit Lasern, welche
kurze Blitze von einigen ns Dauer aussenden. Diese Impulse werden
kollimiert und an einem Strahlenteiler 2 in eine Messkomponente und
eine Referenzkomponente geteilt. Die Referenzkomponente gelangt über
einen vorrichtungsinternen Referenzlichtweg 3 auf einen Referenzempfänger 4. Die Messkomponente wird über eine Sendeoptik 5 auf den
Messweg abgestrahlt und gelangt nach Reflexion an einem Zielobjekt
und nochmaligem Durchlaufen des Messweges auf eine Empfängeroptik 6,
die das Messlicht auf einen Messempfänger 7 sammelt. Im Mess- bzw.
Referenzempfänger 7 bzw. 4 werden Mess- bzw. Referenzkomponente
entweder lichtelektrisch gewandelt oder optisch weiterverarbeitet.


Jede Komponente wird in einem Impulsteiler 8 bzw. 8' nochmals in
zwei Komponenten geteilt, von denen jeweils die eine gegenüber der
anderen erfindungsgemäss um eine bestimmte Zeit verzögert wird.
Liegen die Komponenten nach der Teilung an den Teilern 8, 8' bereits

0022747

in elektrischer Form vor, so werden sie vor der Verzögerung je einer
elektrischen Impulsformerstufe 9, 10 bzw. 11, 12 zugeführt, in der sie
durch Integration erfindungsgemäss von Störanteilen befreit werden.
Am Ausgang der Stufen 9 und 10 treten also die integrierten
elektrischen Referenzimpulse auf und am Ausgang der Stufen 11 und 12
die integrierten elektrischen Messimpulse. Die Referenzimpulse aus
Stufe 10 bzw. die Messimpulse aus Stufe 12 durchlaufen dann je eine
Verzögerungsstufe 13 bzw. 14 in denen sie um eine geeignete Zeitdauer in der Grössenordnung der Breite der integrierten Impulse gegenüber den Impulsen aus Stufe 9 bzw. 11 verzögert werden.

Für die Verzögerungsstufen 13, 14 können elektrische oder auch
optische Ausführungsformen gemäss dem Stand der Technik verwendet
werden. Verwendet man elektrische Impulsformerstufen 9, 10, 11, 12,
so wird man die optischen Verzögerungsstufen 13, 14 im Signalweg
zweckmässig vor den Stufen 10 bzw. 11 anordnen und die lichtelektrischen Wandler aus den Empfängern 4 und 7 nach den Stufen 13,
14 ansetzen.

Elektrische Differenzstufen 15 bzw. 16 bilden nun die Differenzen
zwischen dem verzögerten und unverzögerten elektrischen Referenz-
bzw. Messignal. Die Differenzsignale weisen Nullstellen auf, deren
zeitliche Lage erfindungsgemäss nur wenig von Störungen beeinflusst
wird, wie sie insbesondere an den optischen Messimpulsen auftreten.
Diese Nullstellen werden durch Pegelkomparatoren 17, 18 detektiert.
Der Komparator 17 erzeugt ein dem Referenzimpuls entsprechendes
Startsignal und der Komparator 18 ein dem Messimpuls zugeordnetes
Stoppsignal für einen nachgeschalteten Zeitintervallzähler 19 an
sich bekannter Art. Das gemessene Zeitintervall ist gleich der Differenz der Laufzeiten von Referenzimpuls und Messimpuls, d.h.
gleich der Laufzeit des optischen Messimpulses über die doppelte
Messentfernung. Bei Kenntnis der mittleren Geschwindigkeit der Lichtimpulse über die Messentfernung ist die ermittelte Laufzeit ein
direktes Mass für die zweifache zu messende Entfernung. Die Genauigkeit des Messergebnisses kann dann in an sich bekannter Weise noch
durch Wiederholungsmessungen verbessert werden. Die Funktion der soweit beschriebenen Vorrichtung zur Distanzmessung ist damit beschrieben.

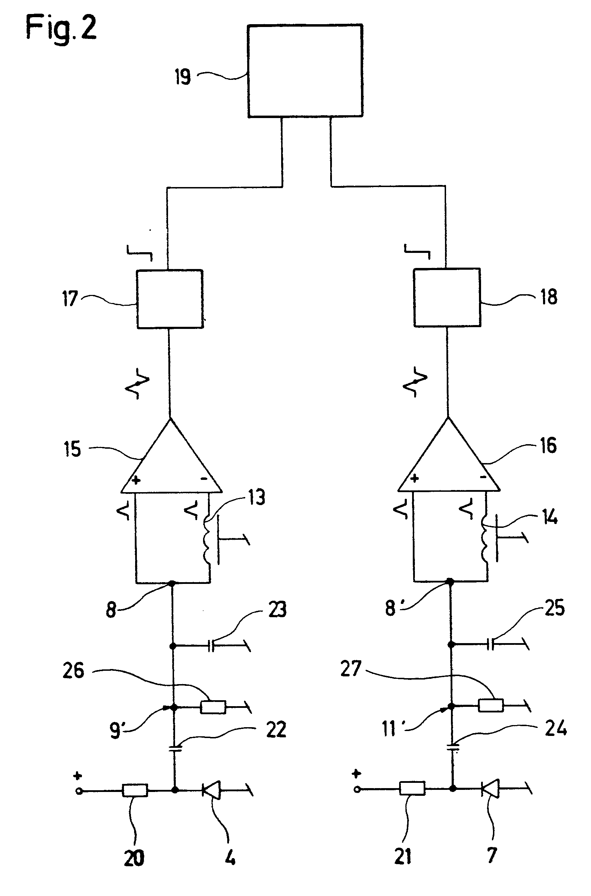

In der in Fig. 2 dargestellten Empfängerschaltung sind der Fig. 1
entsprechende Bauelmente mit entsprechenden Bezugszeichen bezeichnet.
Als Referenz- bzw. Messempfänger für die Lichtimpulse sind Fotodioden
4 bzw. 7 vorgesehen, denen über Widerstände 20 bzw. 21 der Betriebsstrom zugeführt ist. Den Fotodioden 20 bzw. 21 nachgeschaltet sind
als Impulsformerstufen Integratoren 9' bzw. 11', die aus je zwei
Kondensatoren 22, 23 bzw. 24, 25 sowie einem Widerstand 26 bzw. 27
aufgebaut sind. Gegenüber der Breite der ungestört ausgesendeten
Lichtimpulse von einigen ns ist die Breite der Ausgangssignale der
Integrationsschaltungen 9', 11' etwa 100 mal grösser, nämlich einige
100 ns. Diese elektrischen Signale werden an Verzweigungen 8 bzw. 8'
geteilt, und jeweils eine Komponente wird in je einer Verzögerungsschaltung 13 bzw. 14 in passender Weise verzögert.

Die Grösse der Verzögerung ist so gewählt, dass die in nachfolgenden
Differenzverstärkern 15 bzw. 16 gebildeten Differenzsignale möglichst
steile Nulldurchgänge aufweisen. Die nachfolgenden Nullpegelkomparatoren 17, 18 und der Zeitintervallzähler 19 an sich bekannter
Art verarbeiten die erfindungsgemäss gewonnenen Zählsignale in der zu Fig. 1 beschriebenen Art.

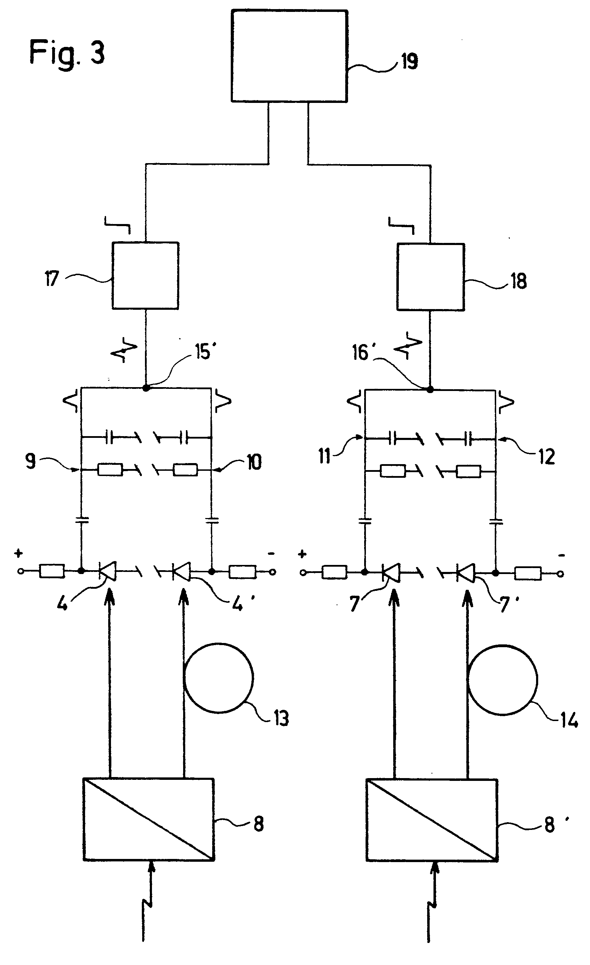

In der Empfängerschaltung gemäss Fig. 3 sind im Gegensatz zum Ausführungsbeispiel gemäss Fig. 1 die Impulsteiler 8, 8' für Referenz- und Messimpulse der übrigen Schaltung vorangestellt und als optische Teiler ausgeführt. Die nachfolgenden Verzögerungsstufen sind als optische Verzögerungsleitungen 13, 14, z.B. als Lichtleiter ausgebildet. Demgemäss sind für die vier optischen Referenz- und Messimpulse als Empfänger nun vier Fotodioden 4, 4', 7, 7' mit den zugehörigen Speiseschaltungen vorgesehen. Die Speiseschaltungen für die lichtelektrischen Empfängerdioden 4', 7' für die verzögerten Lichtimpulse bewirken gegenüber den Fotodioden 4, 7 gleichzeitig eine Polarisationsumkehr der elektrischen Ausgangsimpulse, sodass an Stelle der Differenzstufen 15, 16 gemäss Fig. 1 einfache Summierungsknoten 15', 16' treten. Zwischen diese Knoten 15', 16' und die Fotodioden 4, 4', 7, 7' eingefügte Impulsformerstufen 9, 10, 11, 12 entsprechen den zu Fig. 2 beschriebenen Integratoren 9', 11', ebenso die Nullpegelkomparatoren 17, 18 und der Zeitintervallzähler 19 den entsprechenden Elementen gemäss Fig. 2.

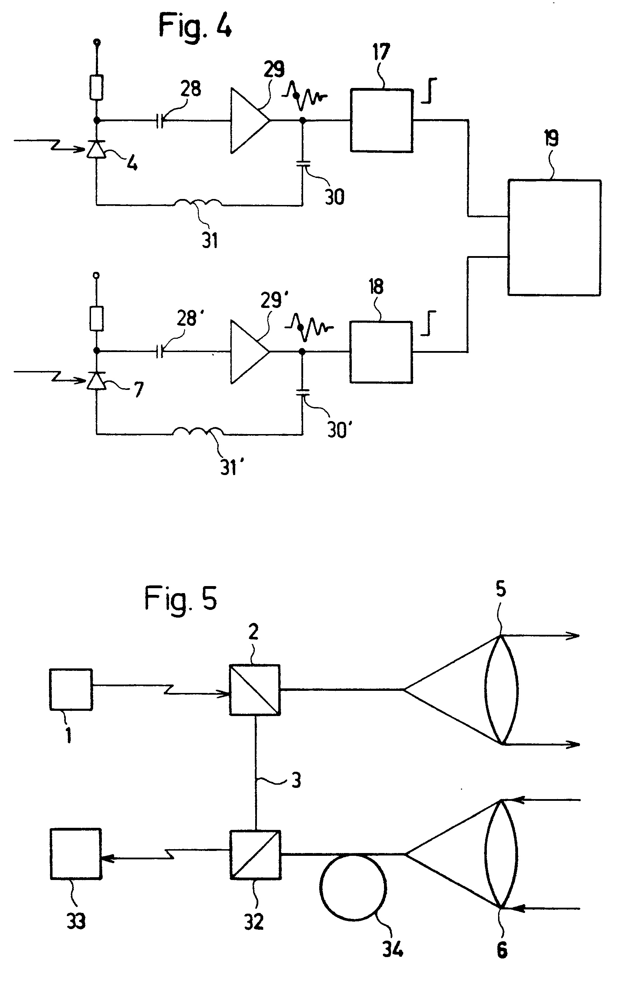

Impulsformung und Impulsverzögerung können also, wie die Ausführungsbeispiele der Fig. 1 bis Fig. 3 zeigen, je nach Bedarf in ihrer Reihenfolge vertauscht sein. Es ist sogar möglich, beide Schritte in einer einzigen Schaltungsstufe zu kombinieren. Ein erfindungsgemässes Ausführungsbeispiel hierfür ist in Fig. 4 dargestellt. Die optischen Referenz- bzw. Messlichtimpulse werden in Fotodioden 4 bzw. 7 in elektrische Impulse umgesetzt. Jeder Fotodiode 4, 7 ist nun eine Brücke nachgeschaltet, welche aus einem ersten Kondensator 28, 28', einem Verstärker 29, 29' einem zweiten Kondensator 30, 30', sowie

- 9 -

0022747

einer Induktivität 31, 31' besteht. Durch diese Brückenschaltung werden die elektrischen Ausgangsimpulse der Fotodioden in je einen gedämpften Schwingungszug umgeformt, dessen Nulldurchgänge von Störungen der optischen Eingangsimpulse weitgehend unabhängig sind. Aehnlich wie schon zu Fig. 1 beschrieben, detektieren die Pegelkomparatoren 17 bzw. 18 nun die Zeitpunkte der ersten abfallenden Nulldurchgänge der Schwingungszüge durch Erzeugung je eines zeitsignifikanten Start- bzw. Stoppsignales für den nachgeschalteten Zeitintervallzähler 19.

In den Figuren 2 bis 4 sind Empfängerschaltungen zur Verwendung in erfindungsgemässen Vorrichtungen zur Entfernungsmessung dargestellt. Fig. 5 zeigt nun ein Schema einer derartigen Vorrichtung, bei der für die Referenz- und Messimpulse ein einziger gemeinsamer elektrischer Empfängerkanal vorgesehen ist. Dabei entsprechen optischer Sender 1, Strahlenteiler 2, Referenzlichtweg 3, Sendeoptik 5 und Empfängeroptik 6 den mit den gleichen Bezugszeichen versehenen Elementen gemäss Fig. 1. Der Empfängeroptik 6 nachgeschaltet ist eine optische Verzögerungsleitung 34 für die Messlichtimpulse. Mess- und Referenzweg sind nun erfindungsgemäss mittels eines Strahlsummierers 32 vereinigt und einem und demselben fotoelektrischen Empfänger mit Auswerteelektronik 33 zugeführt.

Die Verzögerungsleitung 34 bewirkt im Gegensatz zur Verzögerungsleitung 14 gemäss Fig. 3 nicht, dass sich zwei Impulse teilweise überdecken, sondern dass der Messimpuls sicher vom Referenzimpuls getrennt verarbeitet wird. Die Verzögerung der Leitung 34 muss deshalb gross gegen die Breite der vorkommenden Impulse sein. Diese Verzögerung wird dann bei der Messung des Zeitintervalles zwischen Mess- und Referenzimpuls als Additionskonstante berücksichtigt. In der Empfängerstufe 33 kann ein erfindungsgemässer fotoelektrischer Empfänger 7 mit elektrischem Empfängerkanal beispielsweise gemäss Fig. 2 oder Fig. 4 eingesetzt werden. Dabei ist nur zu beobachten, dass ein Zeitintervallzähler 19 an sich bekannter Art verwendet wird, der den Referenzpuls vom Messpuls unterscheiden kann, indem er bei Einlauf des ersteren startet und bei Einlauf des zweiten die Zeitintervallzählung beendet ("stoppt").

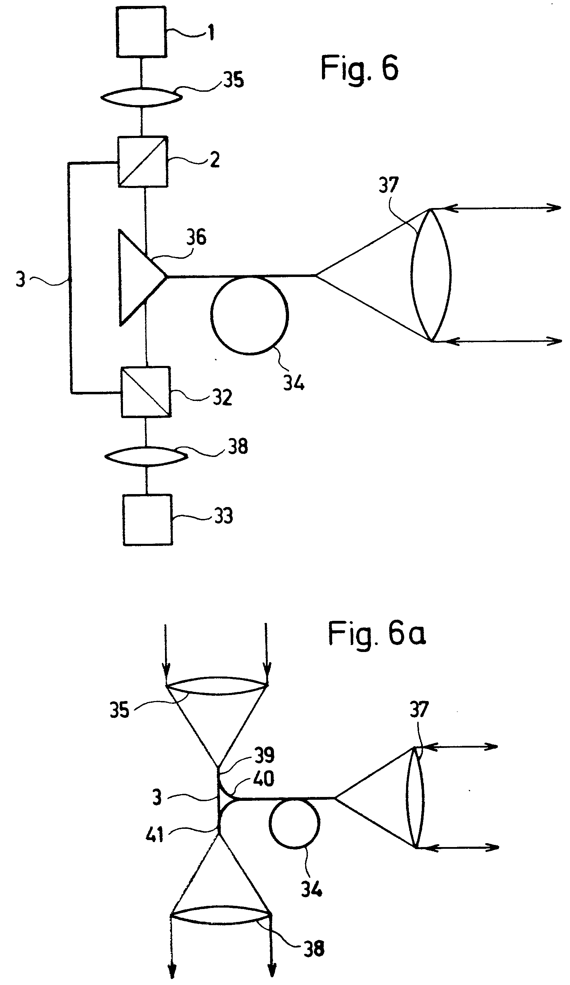

Die Verzögerungsleitung 34 benötigt zur sicheren Impulstrennung eine nicht unbedeutende Länge. Diese Länge wird doppelt ausgenutzt, wenn man gemäss Fig. 6 einen für Sender und Empfänger gemeinsamen optischen Kanal benutzt. Die Lichtimpulse vom Sender 1 werden in diesem Fall durch einen Kollimator 35 über den Strahlenteiler 2 auf den Referenzlichtweg 3 gesammelt und über einen geometrischen Strahlenteiler 36 auf die Verzögerungsleitung 34. Die Optik 37 dient nun gleichzeitig zum Aussenden der Lichtimpulse von der Leitung 34 auf den Messweg und zum Empfang dieser Impulse vom Messweg her. Die empfangenen Impulse durchlaufen dann die Verzögerungsleitung 34 ein zweites Mal bevor sie über den Strahlenteiler 36 und Strahlsummierer 32 mittels eines zweiten Kollimators 38 auf einen Empfänger mit Auswerteelektronik 33 geleitet werden. Strahlsummierer 32 für Mess- und Referenzimpulse sowie Empfängerstufe 33 entsprechen also den Bauelementen der Fig. 5.

Verwendet man Lichtwellenleiter mit Verzweigungen 39, 40, 41 an sich bekannter Art, wie dies in Fig. 6a dargestellt ist, so kann man die Strahlenteiler 2, 32, 36 einsparen und benötigt nur noch die Optiken 35, 37, 38 und die Verzögerungsleitung 34.

Variationen der in den Figuren 1 bis 6a dargestellten und beschriebenen erfindungsgemässen Ausführungsbeispiele können zweckmässig sein. So kann auf eine optische Impulsteilung gemäss Fig. 3 auch direkt eine fotoelektrische Umsetzung jeder Komponente mit nachfolgender elektrischer Verzögerung und anschliessender Pulsformung folgen, oder man ordnet die Pulsformer vor dem Verzögerer an. Teilt man die Impulse nach fotoelektrischer Umsetzung elektrisch wie in Fig. 2, so liegen die genannten Möglichkeiten: Pulsformung-Pulsverzögerung und Pulsverzögerung-Pulsformung ebenfalls mit im Bereich der Erfindung.

0022747

KERN & CO. AG                                    5001   Aarau

                                                       (Schweiz)

Patentansprüche

1. Verfahren zur Messung der Entfernung zwischen einem Objekt und
   einem Bezugspunkt, bei dem Lichtimpulse von einem Sender zum Objekt
   und vom Objekt zurück zu einem Empfänger in der Nähe des Senders
   übertragen werden und bei dem zur Gewinnung der Laufzeit der
   Lichtimpulse mittels fotoelektrischer Empfänger Sende- und
   Empfangszeitpunkte der Lichtimpulse definierende elektrische
   Signalimpulse erzeugt werden, dadurch gekennzeichnet, dass die
   Impulse zur Bestimmung der Sende- und Empfangszeitpunkte in jeweils zwei Impulskomomponenten mit definierter Phasenlage geteilt
   werden, dass die Impulse zur Unterdrückung von Störanteilen über
   mindestens eine Pulsformerstufe (9, 9', 10, 11, 11', 12) geführt
   werden, dass die eine Impulskomponente gegenüber der anderen um
   eine definierte Zeitdauer verzögert wird, dass die Differenz
   zwischen verzögerter und unverzögerter Impulskomponente gebildet
   wird und dass das Auftreten eines bestimmten Pegels im Differenzsignal zur Bestimmung des Empfangszeitpunktes des jeweiligen
   Impulses verwendet wird.

2. Vorrichtung zur Durchführung des Verfahrens nach Anspruch 1, bei der die vom Objekt zurückkommenden Lichtimpulse direkt auf einen fotoelektrischen Empfänger fallen, gekennzeichnet durch eine Integrationsschaltung (9, 9', 10, 11, 11') zur Pulsformung der Ausgangssignale des fotoelektrischen Empfängers (4, 4', 7, 7') durch eine Verzögerungsschaltung (13, 14) zur definierten Verzögerung der Ausgangssignale der Integrationsschaltung, ferner durch eine Differenzstufe (15, 16) zur Bildung der Differenz zwischen unverzögertem und verzögertem Ausgangssignal der Integrationsschaltung und einen Komparator (17, 18) für das Differenzsignal, der ein zeitsignifikantes Messignal abgibt, wenn das Differenzsignal den Pegel Null durchläuft.

3. Vorrichtung zur Durchführung des Verfahrens nach Anspruch 1, gekennzeichnet durch einen optischen Strahlenteiler (8, 8') zur Teilung der Lichtimpulse, durch eine optische Verzögerungsleitung (13, 14) zur definierten Verzögerung einer Komponente der geteilten Lichtimpulse, durch je einen fotoelektrischen Empfänger (4, 4', 7, 7') zur Umsetzung der unverzögerten und der verzögerten Komponenten, ferner durch eine invertierende (10, 12) und eine nichtinvertierende (9, 11) Integrationsschaltung zur Pulsformung der verzögerten bzw. unverzögerten Ausgangssignale der fotoelektrischen Empfänger, eine Summierstufe (15', 16') zur Bildung der Summe des verzögerten Ausgangssignales der einen und des unverzögerten Ausgangssignales der anderen Integrationsschaltung, sowie einen Komparator (17, 18) für das Summensignal, der ein zeitsignifikantes Messignal abgibt, wenn das Summensignal den Pegel Null durchläuft.

4. Vorrichtung zur Durchführung des Verfahrens nach Anspruch 1, bei der die Lichtimpulse auf eine Fotodiode als fotoelektrischer Empfänger fallen, gekennzeichnet, durch eine der Fotodiode (4, 7) parallel geschaltete Brücke, die aus einer ersten Kapazität (28, 28'), einem selektiven Verstärker (29, 29'), einer zweiten Kapazität (30, 30') und einer Induktivität (31, 31') besteht und die Signalaufbereitung der elektrischen Signalimpulse bewirkt, sowie durch einen Komparator (17, 18) für das Ausgangssignal des Verstärkers, der ein zeitsignifikantes Messignal abgibt, wenn sein Eingangssignal eine erste Nullstelle durchläuft.

5. Vorrichtung nach einem der Ansprüche 2 bis 4, bei der die Lichtimpulse am Sender geteilt werden und gleichzeitig über das Objekt und über einen Referenzweg zum Empfänger übertragen werden, dadurch gekennzeichnet, dass eine und dieselbe Empfängerschaltung (33) die Referenzimpulse und die Messimpulse vom Objekt her verarbeitet und dass die Messimpulse zusätzlich eine optische Verzögerungsleitung (34) durchlaufen.

6. Vorrichtung nach Anspruch 5, gekennzeichnet durch Mittel (35, 36, 37, 38, 39, 40, 41) zur optischen Strahlenführung, welche die Messlichtimpulse nach deren Aussendung zum Objekt und vor deren Empfang vom Objekt über die gleiche optische Verzögerungsleitung (34) führen.

Fig. 1

0022747
1/5

Fig.2

0022747

2/5

Fig. 3

Fig. 4

Fig. 5

Fig. 6

Fig. 6a